# EUROPEAN PATENT APPLICATION

(11) **EP 4 738 127 A1**
(43) Date of publication of application: **06.05.2026**
(21) Application number: 25210872.5
(22) Date of filing: 23.10.2025
(51) Int. Cl.: G06F 11/34, G06F 11/30, G06F 11/00

(54) **OUTAGE PROJECTION IN CLOUD COMPUTING SYSTEMS**

(30) Priority: 31.10.2024 US 202418933739
(71) Applicant: Microsoft Technology Licensing, LLC, Redmond, WA 98052 (US)
(72) Inventor: KIM, George, Redmond, 98052 (US); LANEY, Christian, Redmond, 98052 (US); PEREZ, Anthony, Redmond, 98052 (US)
(74) Representative: CMS Cameron McKenna Nabarro Olswang LLP

(57) **Abstract**

Systems and methods to determine a measured risk of a service outage of a service in a cloud computing system. A system determines service dependencies and evaluates parity drift status information associated with the dependencies using an outage projection model (e.g., a machine learning model, heuristic, and/or a combination of models) trained/otherwise operative to identify a pattern of parity drift status information correlated to a historical pattern associated with a past service outage. The system determines an outage risk score and/or level representing the measured risk of a service outage occurring for the service based on the correlation. The system further provides the outage risk score and/or level (e.g., to a remediation and/or deployment orchestration system). In some examples, an alert is provided when the outage risk score and/or level satisfies a threshold (e.g., is highly indicative of a potential service outage) to proactively facilitate prevention of an outage.

## Description

### BACKGROUND

A cloud computing system can be used to build, deploy, and manage applications and services. Cloud services of a cloud computing system are oftentimes subject to one or more distributed computing models, where a plurality of cloud resources perform specific functions or provide specific capabilities. Dependencies between a cloud service and various cloud resources exist when the service utilizes the various resources to support the service to function as intended. Thus, the one or more cloud resources are dependencies of the service. A software system deployed in a cloud computing system may include hundreds or thousands of different services and dependencies. Each of these services and dependencies can have multiple versions.

"Parity drift" in the context of cloud computing refers to when a target cloud computing system starts to differ or "drift" from a source or reference cloud computing system (e.g., a last known good version that has been tested and determined to not have any bugs). This can occur due to changes in configuration (e.g., an application programming interface change, a version upgrade), data, or state that are not synchronized between the two systems. Some instances of parity drift can cause inoperability issues and, in some cases, service outages. For instance, an inoperability issue may cause performance of a feature or functionality of the cloud computing system to degrade or become unstable.

It is with respect to these and other considerations that examples have been made. In addition, although relatively specific problems have been discussed, it should be understood that the examples should not be limited to solving the specific problems identified in the background.

### SUMMARY

The technology described herein describes systems and methods to determine a measured risk of a service outage of a service in a cloud computing system. An outage projection system determines dependencies of the service and evaluates parity drift status information associated with the dependencies. In some examples, the outage projection system uses a machine learning model trained to identify a pattern of parity drift status information that is correlated to a historical pattern associated with a past service outage. The system determines an outage risk score and/or level representing the measured risk of a service outage occurring for the service based on the correlation. In other examples, the outage projection uses a heuristic model and/or a combination of models. The system further provides the outage risk score and/or level (e.g., to a remediation system). In some examples, an alert is provided when the outage risk score and/or level satisfies a threshold (e.g., is highly indicative of a potential service outage) to proactively facilitate prevention of an outage. In further examples, a new deployment or a rollback is triggered to prevent an outage. For instance, one or a combination of services can be rolled back to a latest known good state, rolled forward or back to a known state or combination of versions that is stable, etc.

This Summary is provided to introduce a selection of concepts in a simplified form that are further described below in the Detailed Description. This Summary is not intended to identify key features or essential features of the claimed subject matter, nor is it intended to be used to limit the scope of the claimed subject matter.

### BRIEF DESCRIPTION OF THE DRAWINGS

The present disclosure is illustrated by way of example by the accompanying figures, in which like references indicate similar elements. Elements in the figures are illustrated for simplicity and clarity and have not necessarily been drawn to scale.
**FIGURE 1** is a block diagram of an example operating environment in which an outage projection system is implemented according to an example;
**FIGURE 2** depicts an example dependency map of a service of interest according to an example;
**FIGURE 3** depicts example parity drift status information of a service of interest and its service dependencies according to an example;
**FIGURE 4A** depicts an example outage risk result including ratio-based outage risk scores according to an example;
**FIGURE 4B** depicts an example outage risk result including ratio-based outage risk scores and indications of potential outage risk levels according to an example;
**FIGURE 5** depicts a flow diagram depicting a first example method of determining a measured risk of a potential occurrence of a service outage according to an example; and
**FIGURE 6** is a block diagram illustrating example physical components of a computing device with which examples of the disclosure may be practiced.

### DETAILED DESCRIPTION

Implementations of the present disclosure use an outage projection system to determine a measured risk (potential) of a service outage of a service of interest in a cloud computing system according to examples. More specifically, the outage projection system determines dependencies of the service of interest and then evaluates parity drift status information associated with service dependencies to identify a pattern of parity drift status information that correlates to a historical pattern of parity drift status information associated with a past outage. In some examples, a machine learning (ML) model is used to determine and output an outage risk score that represents the measured risk of a service outage occurring for the service of interest based on the correlation. In further examples, the outage projection system determines a potential outage risk level based on the outage risk score and provides, as output, an indication of the potential outage risk level. In some implementations, the outage risk score and the potential outage risk level are measured across a group of computing resources. For instance, an inquiry may be received for a potential outage risk score and/or level of a physical grouping of cloud resources.

In yet further examples, an alert is provided in association with the output when the outage risk score and/or potential outage risk level satisfies an upper threshold (e.g., is highly indicative of a potential service outage). For instance, the outage projection system proactively facilitates prevention of a service outage of the service of interest in the cloud computing system by determining the measured risk of a potential service outage and providing an output that indicates the measured risk. Implementations of the present disclosure provide benefits, such as improving reliability of the service of interest. For instance, by projecting and proactively preventing outages, downtime and disruptions are minimized, thereby enhancing the reliability of the service of interest.

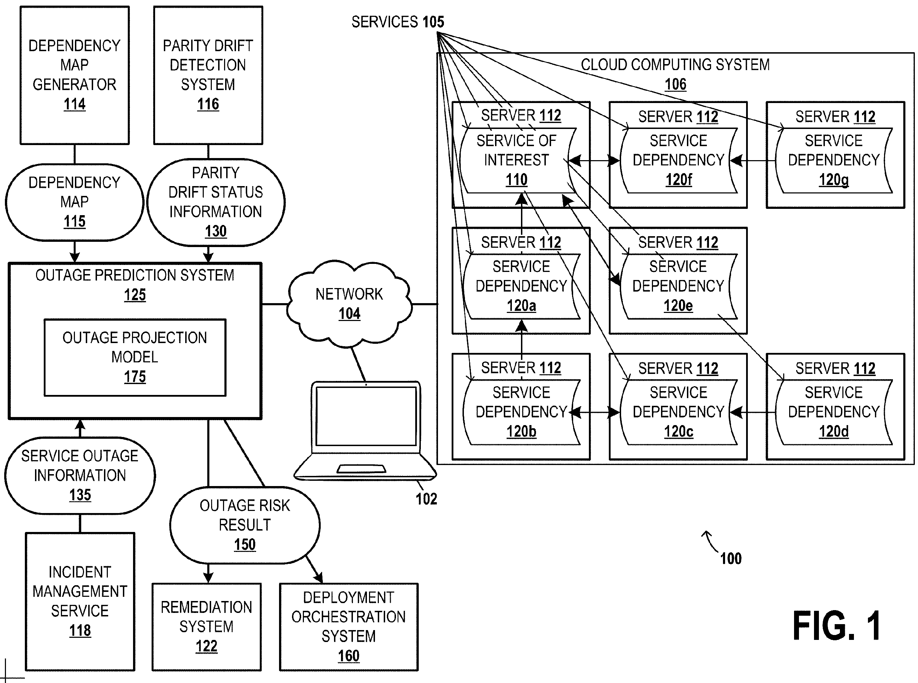

**FIGURE 1** is a block diagram illustrating an overview of an example operating environment **100** in which parity drift related outage projection is implemented according to an example. The operating environment **100** includes a cloud computing system **106** including one or more hardware and/or software components. In aspects, the cloud computing system **106** includes or provides access to service(s) **105** to user devices **102** (e.g., personal computers (PCs), mobile devices (smartphones, tablets, laptops, personal digital assistants (PDAs)), wearable devices (smart watches, smart eyewear, fitness trackers, smart clothing, body-mounted devices, head-mounted displays), media devices, gaming consoles or devices, Internet of Things (IoT) devices, etc.). For instance, components are subject to various distributed computing models/services, such as Infrastructure as a Service (IaaS), Platform as a Service (PaaS), Software as a Service (SaaS), and Functions as a Service (Favas). Although **FIGURE 1** is depicted as including a particular combination of computing environments and devices, the scale and structure of systems such as operating environment **100** and/or cloud computing system **106** may vary and may include additional or fewer components than those described in **FIGURE 1****.** As one example, the operating environment **100** may include multiple cloud computing systems **106.** As yet another example, one or more user device(s) **102** may include or locally access one or more services **105.**

In examples, the services **105** are provisioned on managed servers **112.** In some examples, the services **105** are provisioned on virtual machines (VMs) implemented on the managed servers **112** using a containerized architecture or hypervisor architecture. When an application is executed in such virtualized environments, various services **105** of the distributed computing system can be invoked by applications, libraries, or binaries executed in the VMs, a container engine or hypervisor, and/or by a host operating system in response to requests from software components in the VMs. In some examples, for each service **105,** a corresponding service instance is instantiated on the servers **112** in response to the requests by the VMs. The service instances may communicate with each other and other service instances within the operating environment **100** over computer networks **104.** In some examples, a service **105** includes a plurality of service instances executed on servers **112** across one or more cloud computing systems **106.** In some implementations of a distributed cloud computing system **106,** millions of servers **112** may be provided, and billions of requests per hour may flow between service instances. Further, the servers **112** may be located in data centers located in different geographic regions. Each geographic region includes its own set of servers **112** and infrastructure to handle the operations of the service instance. In examples, the larger and more distributed the cloud computing system **106,** the more complex it becomes to determine when various services **105** may be out of parity. For instance, parity drive is a natural occurrence where there may be hundreds, thousands, or more concurrent ongoing changes occurring at any given point of time in a cloud computing system **106** (e.g., reference and target cloud computing system **106).** In some implementations, services **105** are tested with a specific combination of dependency versions but may not be tested with all possible deployed permutations.

According to an example implementation, the operating environment **100** includes an outage projection system **125** that determines risk of a potential service outage of a service of interest **110** of a cloud computing system **106.** The term "service of interest" **110** is used herein to describe a service **105** that is being evaluated by the outage projection system **125** for determining a measure of a potential occurrence of a service outage. In examples, the outage projection system **125** evaluates a service of interest **110** and provides an outage risk result **150** when triggered. In various implementations, the outage projection system **125** is triggered by a scheduler or timer, automatically as part of an onboarding process or update of the service of interest **110,** when input is received (e.g., from a dependency map generator **114,** a parity drift detection system **116,** and/or an incident management service **118),** based on receiving user input (e.g., via an HTTP trigger-based execution), or via another method. In examples, the outage projection system **125** determines the measurement of a potential occurrence of a service outage based on an identified pattern of parity drift status of one or more services **105** in the cloud computing system **106** that have a dependency relationship with the service of interest **110.** In some examples, processing a payload by the service of interest **110** includes leveraging (e.g., depending on) functionality of one or more other services **105** to perform or enhance performance of an operation. The term "service dependency" **120a-120g** (collectively, service dependency **120)** is used herein to describe a service **105** upon which another service **105** depends.

Parity drift status refers to a comparison between a reference cloud computing system **106** and a target cloud computing system **106** indicating whether the target cloud computing system **106** is operating at a same or different level as the reference cloud computing system **106.** The reference cloud computing system **106** includes a last known good version of a service **105** that has been tested and determined to not have any bugs. In some examples, the reference cloud computing system **106** represents the service **105** at a previous time, a different instance of the service **105,** or another service **105** similar to the service **105** (e.g., performs comparable functions, has comparable configurations, or has similar dependencies). In examples, parity drift status includes an indication of detected parity drift (e.g., when a service **105** starts to differ or "drift" from a source (the reference cloud computing system **106)).** Maintaining parity across separate cloud computing systems **106** is difficult because of the immense size and complexities of cloud computing systems **106.** Further, services **105** largely deploy and replicate independently from each other and on irregular schedules.

The cloud computing system **106** depicted in **FIGURE 1** includes an example service of interest **110** and multiple example service dependencies **120.** In some examples, a service dependency **120** is a direct dependency of the service of interest **110.** In other examples, a service dependency **120** is an indirect dependency of the service of interest **110.** For instance, service dependencies **120a, 120e,** and **120f** are direct dependencies of the service of interest **110,** while service dependencies **120b, 120c, 120d, 120g,** and **120h** are indirect dependencies of the service of interest **110.** By being dependencies of the service of interest **110,** the service dependencies **120** provide functionality to the service of interest **110** to enable the service of interest **110** to perform tasks (e.g., retrieve data, store data, schedule an event). As one example, a network monitoring service **105** (e.g., a service of interest **110)** may rely on an event analysis service **105** (e.g., a service dependency **120)** to classify network activity detected by the network monitoring service **105.** In this example, the network monitoring service **105** may invoke (e.g., call) the event analysis service **105** in response to detecting potentially anomalous network activity. The event analysis service **105** may evaluate the network activity and provide results of the evaluation to the network monitoring service **105.** As another example, a content recommendation service **105** (e.g., a service of interest **110)** designed to provide users with personalized content recommendations may depend on a large language model (LLM) as a service dependency **120** to analyze the user's preferences and browsing history and generate insights about the user's interests. Other types of services of interest **110** and service dependencies **120** are possible and are within the scope of the present disclosure. In some examples, a service dependency **120** is both a dependency of and dependent on one or more other service dependencies **120** and/or the service of interest **110.** For example, service dependencies **120e** and **120f** are dependencies of the service of interest **110,** and further, the service of interest **110** is a dependency of service dependencies **120e** and **120f.** As a dependency of the service dependencies **120e** and **120f,** the service of interest **110** provides functionality that enables the service dependencies **120e** and **120f** to perform their respective tasks. The service of interest **110** may be associated with any number of direct or indirect service dependencies **120** and each service dependency **120** may be dependent on any number of other service dependencies **120,** services **105,** or services of interest **110.**

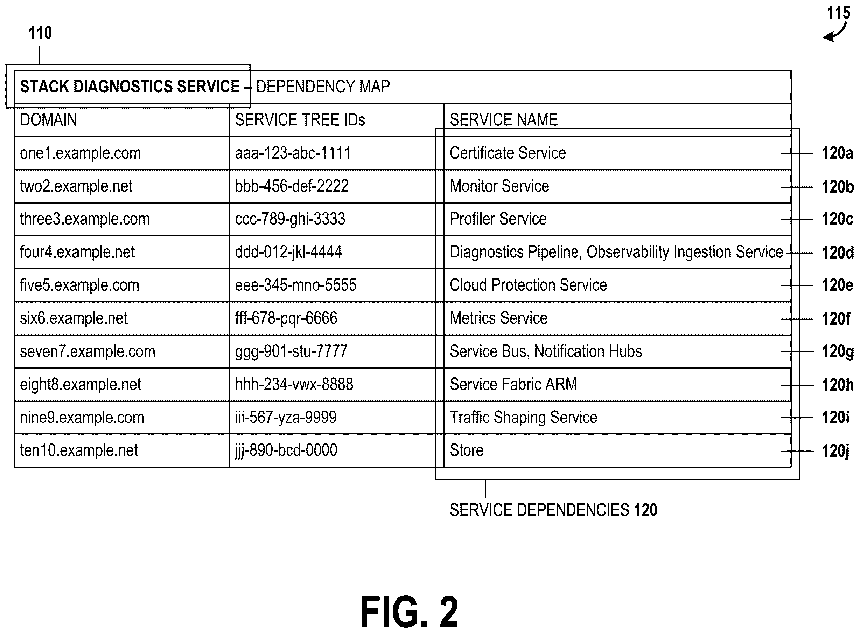

According to an aspect, the outage projection system **125** includes or is in communication with a dependency map generator **114.** The dependency map generator **114** generates and provides service-to-service dependency maps **115** to the outage projection system **125.** A service-to-service dependency map **115** is a representation of dependency relationships between a service of interest **110** and other services **105** in one or more cloud computing systems **106.** In some examples, the dependency map generator **114** generates the dependency map **115** by analyzing Domain Naming Service (DNS) logs and fleet management system logs corresponding to a group of cloud computing systems **106** that are managed together. For instance, the fleet of cloud computing systems **106** are monitored for potential outages by the outage projection system **125.** DNS logs include records of network requests made by services **105.** By analyzing the DNS logs, the dependency map generator **114** can identify which services **105** are communicating with each other. The fleet management system logs include information about the state of the cloud computing system **106,** including which services **105** are running on which machines (e.g., servers **112),** the Internet Protocol (IP) addresses of the services **105,** etc. By analyzing the fleet management system logs, the dependency map generator **114** can identify which services **105** are associated with specific container identifiers and IP addresses. In some implementations, the dependency map generator **114** includes a computing system configured to perform a method to generate a dependency map **115,** such as a computing system described in U.S. Patent No. US11962565B1 to Pathak et al., which is hereby incorporated by reference in its entirety. For instance, and as depicted in **FIGURE 2****,** an example dependency map **115** is shown including a list of service dependencies **120a-120j** of a service of interest **110** (e.g., "stack diagnostics service").

According to an aspect, and with reference again to **FIGURE 1****,** the outage projection system **125** further includes or is in communication with a parity drift detection system **116** that monitors the fleet of cloud computing systems **106** for parity drift. In some implementations, the parity drift detection system **116** includes a computing system configured perform a method to determine parity drift status and detect instances of parity drift, such as a computing system described in U.S. Patent No. US11843501 B2 to Perez et al., which is hereby incorporated by reference in its entirety.

In some examples, the parity drift detection system **116** uses various parity dimensions to measure and score differences between a reference cloud computing system and a cloud computing system **106** to determine instances of parity drift. Example parity dimensions include a distance value (e.g., between version numbers), a freshness value (e.g., a time since a last deployment on the cloud computing system **106),** a deployment time value (e.g., a number of deployments in the reference system since the last corresponding deployment in the cloud computing system **106,** an age value (e.g., a time since the reference cloud computing system was updated from a version identified in the cloud computing system **106),** etc.

In some examples, the parity drift detection system **116** further determines a parity grade based on parity scores of one or more parity dimensions for a service **105.** The parity drift detection system **116** can use various types of grading systems to indicate parity grades. For example, the parity drift detection system **116** can employ a red, yellow, green grading model that represents severity of parity drift in a cloud computing system **106** (e.g., green indicating minor (or no) parity drift, yellow indicating moderate parity drift, and red indicating significant parity drift). The parity scores are determined by comparing reference data to target data. In some instances, the parity drift detection system **116** uses a number scale (e.g., 1-10, 1-100, etc.), a letter-grade, or other type of grading system. According to examples, the parity drift detection system **116** provides parity drift status information **130** (e.g., parity grades, parity scores, and/or parity dimensions) associated with the service of interest **110** and each of the service dependencies **120** to the outage projection system **125.**

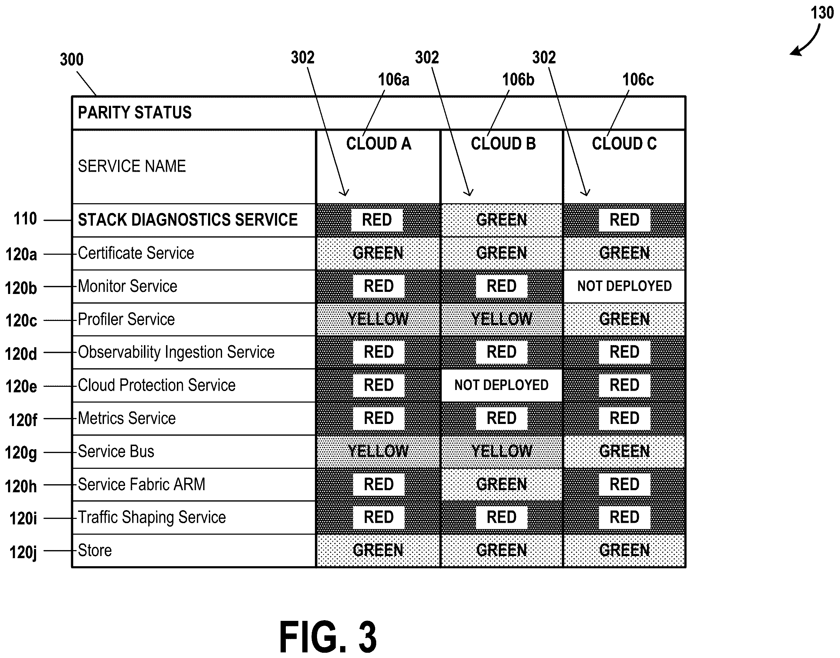

For instance, and with reference to **FIGURE 3****,** an example parity drift report **300** is depicted including parity drift status information **130** provided by the parity drift detection system **116.** The example parity drift report **300** includes a list of the service dependencies **120a-120j** of the service of interest **110,** a list of a plurality of cloud computing systems **106a-106c** in which the service of interest **110** and its service dependencies **120a-120j** operate, and an indication of a parity grade **302** for the service of interest **110** and each service dependency **120** for each cloud computing system **106a-106c.** As an example, the first cloud computing system **106a** may be associated with a first geographic region, the second cloud computing system **106b** may be associated with a second geographic region, and the third cloud computing system **106c** may be associated with a third geographic region.

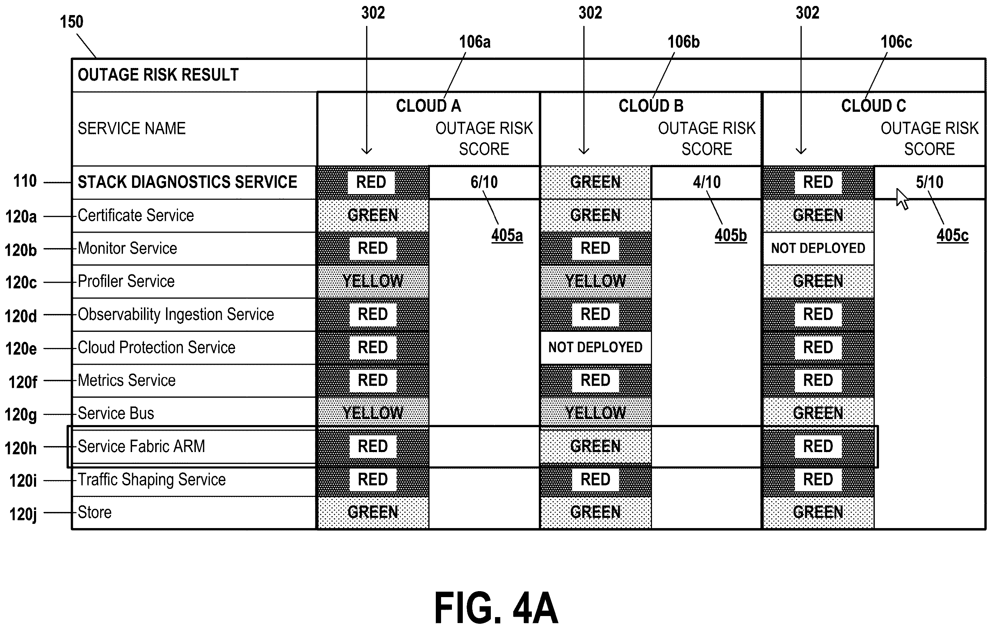

In some implementations, the outage projection system **125** determines one or more outage risk scores when determining an example outage risk result **150** for assessing a measure of a potential occurrence of an outage of a service of interest **110.** In some examples, the one or more outage risk scores include a ratio-based outage risk score that represents a measurement of a ratio of service dependencies **120** of a service of interest **110** that are out of parity in a cloud computing system **106.** For instance, and as depicted in **FIGURE 4A****,** an example outage risk result **150** includes ratio-based outage risk scores **405a-405c** (collectively, ratio-based outage risk scores **405)** for corresponding cloud computing systems **106a-106c,** where each ratio-based outage risk score **405** represents a ratio between the number of the service dependencies **120** in the cloud computing system **106** that are out of parity and the number of service dependencies **120** of the service of interest **110.**

As an example, the service of interest **110** has ten service dependencies **120a-120j** and is indicated as being out of parity in a first cloud computing system **106a** and a third cloud computing system **106c.** A first example ratio-based outage risk score **405a** for the service of interest **110** is shown as 6/10, indicating that six of the ten service dependencies **120** in the first cloud computing system **106a** (e.g., cloud "A") are determined to be out of parity. A second ratio-based outage risk score **405b** is shown as 4/10, indicating that four of the ten service dependencies **120** in the second cloud computing system **106b** are determined to be out of parity. A third ratio-based outage risk score **405c** is shown as 5/10, indicating that five of the ten service dependencies **120** in the third cloud computing system **106c** are determined to be out of parity. The ratio-based outage risk scores **405** provide insight into a level of parity drift that exists in association with the service of interest **110** and its service dependencies **120.**

In some examples, the one or more outage risk scores additionally or alternatively include an affinity-based outage risk score that represents a measured risk (potential) of a service outage occurring for the service of interest **110** in a cloud computing system **106** based on a correlation of a pattern of parity drift status(es) of one or more of the service dependencies **120** of the service of interest **110** with a historical pattern associated with past outages. According to an example, a parity drift status pattern includes one or a combination of parity drift status information **130** (e.g., parity grades **302,** parity scores, and/or parity dimensions) that corresponds to one or more past outage instances of the service of interest **110.**

According to an aspect, and as depicted in **FIGURE 1****,** the outage projection system **125** further includes or is in communication with an incident management service **118.** In some examples, the incident management service **118** is configured as a trouble ticketing system or service help desk portal that records and provides records of detected outages in a cloud computing system **106.** In some examples, a record of a detected outage is provided to one or more remediation systems **122** to resolve. The record includes outage information **135** about the detected service outage.

In examples, the incident management service **118** provides service outage information **135** to the outage projection system **125.** In further examples, the outage information **135** includes information about outages from interoperability issues due to parity drift. Example service outage information **135** includes an outage identifier, a name of the service **105** detected as experiencing the outage (e.g., service X, where service X is a dependent service), and a severity level of the outage. Severity levels represent the degree to which a detected service outage has impacted the performance of a service **105.** For instance, a first severity level may designate a slight impact to the service **105** (e.g., a small amount of the service's functionality is impacted or unavailable), a second severity level may designate a moderate impact to the service **105** (e.g., a moderate amount of the service's functionality is impacted or unavailable), and a third severity level may designate a severe impact to the service **105** (e.g., a substantial amount or all of the service's functionality is impacted or unavailable). In some examples a record further includes outage information related to service dependencies **120** of a service **105** experiencing an outage. In further examples, the service dependency outage information includes metrics of the affected service **105** related to the detected outage. For instance, the metrics represent anomalous activity that is indicative of an outage (e.g., outlier data points, unexpected trends, elevated resource usage).

In some implementations, the outage projection system **125** includes or is in communication with an outage projection model **175.** In some examples, the outage projection model **175** is an ML model that is used to determine a risk level representing a potential occurrence of a service outage of a service of interest **110** in a cloud computing system **106.** Time series (e.g., AutoRegressive Integrated Moving Average (ARIMA), Long Short-Term Memory (LSTM)), regression (e.g., linear, logistic), tree-based (e.g., Random Forest, Gradient Boosting), neural networks (e.g., Multilayer Perceptrons (MLPs), autoencoders), anomaly detection (Isolation Forest), and/or other types of ML models can be used to determine the risk level. In examples, the outage projection model **175** is built, trained, and updated using historical parity drift status information **130** associated with the service of interest **110** and the service of interest's service dependencies **120** and service outage information **135** associated with the service of interest **110.** The outage projection model**175** is built, trained, and updated to identify features that affect the likelihood of an outage of the service of interest **110** occurring. In other implementations, the outage projection model **175** is a heuristic model that follows a predefined rule set. In some examples, the outage projection model **175** is implemented as a singular "global" model that is used across a plurality of different services **105.** In other examples, the outage projection model **175** is implemented as per-service models that are tailored to specialize in a particular service **105** (e.g., service of interest **110)** and its service dependencies **120.** When analyzing a service of interest **110,** indicators are aggregated from one or a combination of the global outage projection model **175** and the service-specific outage projection model **175.** For instance, the global outage projection model **175** is better suited for more 'generic' indicators such as cross-service and errors in indirect service dependencies **120,** while the service-specific outage projection model **175** offers higher accuracy around nuances of the service of interest **110** and its direct dependencies.

In an example implementation, the identified features include a pattern of parity drift status information **130** associated with one or more of the service dependencies **120** of the service of interest **110.** According to an example, parity drift status patterns include one or a combination of parity drift status information **130** (e.g., parity grades, parity scores, and/or parity dimensions) that corresponds to one or more past outage instances of the service of interest **110.** Weights are applied to parity drift status patterns based on a number and/or severity level of previous (historical) outages. For instance, higher weights may be applied to patterns that are associated with a higher number of outages, outages that last an extended period of time, outages that affect higher-priority services of interest **110** or users, etc.

In some examples, the outage projection system **125** provides, as input to the outage projection model **175,** parity drift status information **130** of a service of interest **110** and identified service dependencies **120** of the service of interest **110** and receives, as output, an affinity-based outage risk score corresponding to a determined measurement of risk of occurrence of an outage of the service of interest **110** in a corresponding cloud computing system **106.** For instance, if a current pattern of parity drift status information **130** matches a historical pattern that has frequently led to outages or has caused significant outages of the service of interest **110** in the past, the affinity-based outage risk score may be higher.

As an example, the outage projection model **175** may have been trained (and/or include heuristic rules defined) using historical data of an association between a particular service dependency **120** being out of parity and a plurality of past outages. For instance, the particular service dependency **120** may be a resource manager template used to define the configuration and infrastructure for the cloud computing system **106,** where the particular service dependency's version not being in parity may adversely affect the service of interest's ability to upgrade for new deployment or to recover the service of interest **110.** Thus, when the particular service dependency **120** is identified as out of parity, the outage projection model **175** may determine a higher affinity-based outage risk score (e.g., than when another service dependency **120** or combination of service dependencies **120** are out of parity).

As another example, two particular service dependencies **120** may be out of parity. Historical data may reveal that, individually, neither of the two particular service dependencies **120** being out of parity is highly indicative of an outage. However, the outage projection model **175** may have learned from the historical data that an outage of the service of interest **110** is more likely when both of the two particular service dependencies **120** are out of parity at the same time. Therefore, in this case, the outage projection model **175** projects a higher affinity-based outage risk score (e.g., than when another service dependency **120** or combination of service dependencies **120** are out of parity).

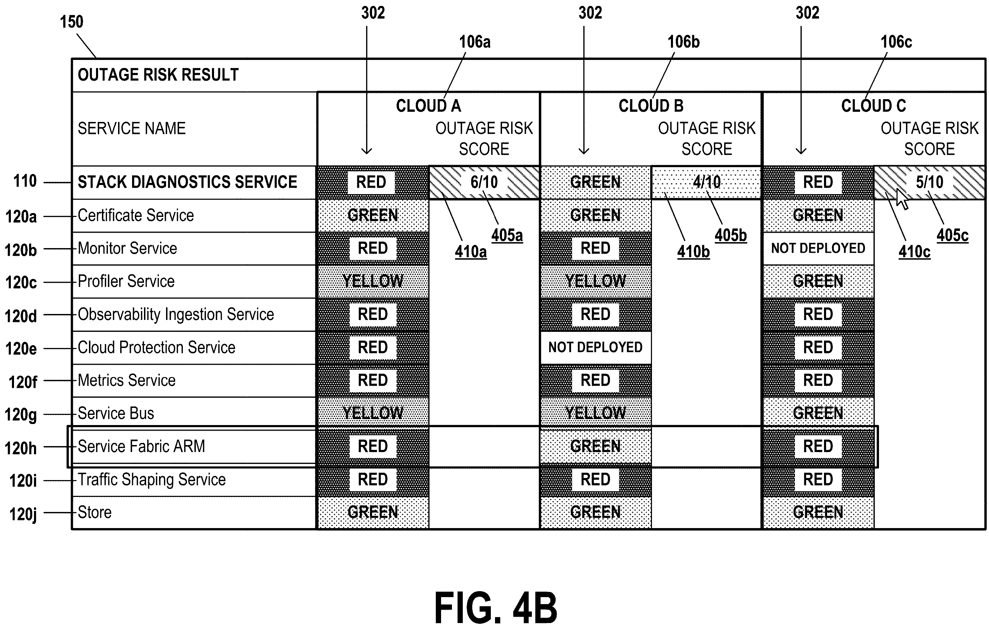

In some implementations, the outage projection system **125** further determines a risk level for a potential outage of the service of interest **110** based on the affinity-based outage risk score determined for a cloud computing system **106.** For instance, a potential outage risk level represents likelihood of an outage occurring due to an inoperability issue, where the potential outage risk level increases as a corresponding affinity-based outage risk score increases. The outage projection system **125** can use various types of grading systems to indicate or report potential outage risk levels. In some examples, and as depicted in **FIGURE 4B****,** the outage risk result **150** additionally or alternatively includes an indicator of a potential outage risk level (potential outage risk level indicator **410a-410c** (collectively potential outage risk level indicator **410**)) determined for the service of interest **110,** where the outage projection system **125** can employ a text, number, or color/shading grading model for representing the indication (e.g., "low," 1-3, or green indicating a lower likelihood of an outage; "moderate," 4-6, or yellow indicating a moderate likelihood of an outage; and "high," 7-10, or red indicating a higher likelihood of an outage).

In some implementations, the outage projection system **125** provides the outage risk result **150** or an indication of the outage risk result **150** as output. For instance, the outage risk result **150** is provided to one or more downstream systems (e.g., a remediation system **122)** and/or one or more users to proactively facilitate prevention of a service outage of the service of interest **110** in a cloud computing system **106.** In some examples, the outage risk result **150** is provided based on the determined outage risk score and/or level (e.g., when the ratio-based outage risk score **405** and/or affinity-based outage risk score satisfies an upper threshold). In further examples, the outage risk result **150** is presented to a user via a user interface of a user device **102.**

In some implementations, the outage projection system **125** provides an alert indicating an instance of parity drift at a service dependency **120** in association with a determined outage risk score and/or level. For instance, the outage projection system **125** provides an alert to a user device **102** associated with the service dependency **120** that is out of parity (e.g., based on parity drift status information **130)** and negatively affects the outage risk score and/or level of the service of interest **110.** In some examples, the alert is in the form of an email, text message, etc. In one example, the email, text message, etc., includes a response link that a recipient can select to indicate a change in parity drift status of the service dependency **120.**

In other implementations, the outage projection system **125** further receives an indication of an update of parity drift status of the service dependency **120.** In some examples, the outage projection system **125** monitors the parity drift status of the service dependency **120** and identifies when parity drift status information **130** of the service dependency **120** indicates the service dependency **120** is in parity or otherwise causes the outage risk score and/or level of the service of interest **110** to lower (e.g., reduce the risk of a service outage of the service of interest **110).** For instance, the outage projection system **125** polls the parity drift detection system **116** for updates to the parity drift status of the service dependency **120.** In other examples, the outage projection system **125** receives a communication (e.g., email or other message) of the update of parity drift status of the service dependency **120.** For instance, the communication may be sent by an administrative user or automatically by a user device **102.**

In some implementations, when the outage projection system **125** receives an indication of an update of parity drift status of the service dependency **120** that causes the outage risk score and/or level of the service of interest **110** to satisfy a lower threshold (e.g., where the lower threshold indicates a lower risk of a service outage), the outage projection system **125** triggers a configuration change (e.g., an application programming interface change, a version upgrade, a version rollback, a service migration from one device or platform to another) to occur. For instance, triggering of the configuration change is dependent on the outage risk result **150** satisfying the lower threshold. In some examples, a new deployment or a rollback is triggered to avoid an outage. For instance, the service of interest **110** and/or one or a combination of service dependencies **120** can be rolled back to a latest known good (LKG) state, rolled forward or back to a known state or combination of versions that is stable, etc. In some examples, the outage projection system **125** is in communication with a deployment orchestration system **160** and provides outage risk results **150** to the deployment orchestration system **160.** The deployment orchestration system **160** schedules deployments based on various variables, such as deployment priority (e.g., low priority indicating normal deployment versus high priority indicating a hotfix/mitigation), impact assessments (e.g., attempts to batch impactful deployments together to reduce node downtime), preferred maintenance windows (e.g., whitelisted or blacklisted timeframes), etc. In some examples, the deployment orchestration system **160** uses received outage risk results **150** to prioritize deployments for services **105** that are determined to be at a higher risk of parity-related issues. In further implementations, a configuration change is blocked or otherwise prevented until the indication of the update of the parity drift status of the service dependency **120** is received.

In yet further examples, the ratio-based outage risk scores **405** and/or potential outage risk level indicators **410** are selectable via the user interface and include a link to additional information. For instance, selection of a ratio-based outage risk score **405** and/or potential outage risk level indicator **410** provides a list of parity drift status information **130** about the associated service dependencies **120.** In some implementations, selecting a ratio-based outage risk score **405** and/or potential outage risk level indicator **410** provides an indication of how the service of interest **110** may be affected due to a potential outage. In examples, the indication of how the service of interest **110** may be affected is based on service outage information **135** about past detected outages of the service of interest **110,** where the past detected outages have a pattern of parity drift status information **130** that is identified as similar to parity drift status information **130** associated with one or a combination of service dependencies **120** of the service of interest **110.**

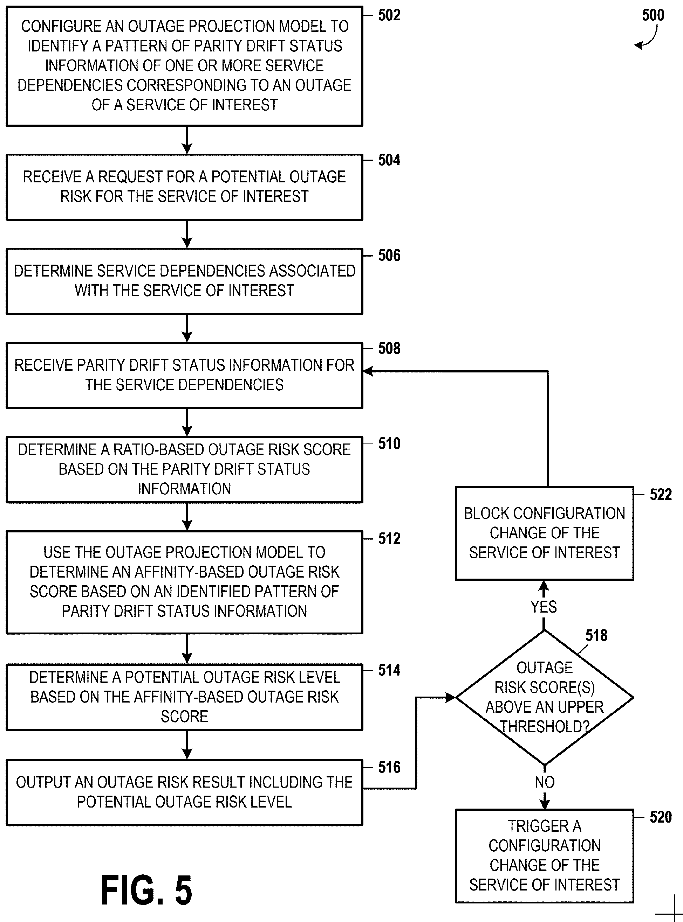

With reference now to **FIGURE 5****,** a flow diagram of an example method **500** for determining a risk level of a potential service outage of a service of interest **110** in a cloud computing system **106** is depicted. At operation **502,** an outage projection model **175** is configured to identify a pattern of parity drift status information **130** of one or more service dependencies **120** of the service of interest **110** that corresponds to historical outages of the service of interest **110.** In some examples, the outage projection model 175 is an ML model trained using a training set of service outage information **135.** For example, the training set of service outage information **135** includes records of past detected outages of the service of interest **110** and parity drift status information **130** (e.g., parity grades, parity scores, and/or parity dimensions) associated with the service of interest **110** and each of the service dependencies **120** of the service of interest **110.** The outage projection model **175** is trained to identify a pattern of parity drift status information **130** that corresponds to a past detected outage to identify similar patterns of parity drift status information **130** to project a risk level for a potential subsequent outage of the service of interest **110.** The training can include supervised learning, semi-supervised learning, unsupervised learning, reinforcement learning, and/or the like, including combinations and/or multiples thereof. In other examples, a rule set and thresholds are defined for which a heuristic-based outage projection model **175** is established to follow to project a risk level for a potential outage of the service of interest **110.**

At operation **504,** a request is received by the outage projection system **125** or the outage projection system **125** is otherwise triggered to determine a risk level for a potential outage of the service of interest **110** in the cloud computing system **106.** In some implementations, the outage projection system **125** is triggered by a scheduler or timer, by a configuration change (e.g., an onboarding process of or update to the service of interest **110),** when input is received (e.g., from a dependency map generator **114,** a parity drift detection system **116,** and/or an incident management service **118),** when user input (e.g., via an HTTP trigger-based execution) is received, or via another method. In examples, the request/trigger includes a reference to the service of interest **110.** In further examples, the request/trigger includes a reference to the cloud computing system **106.**

At operation **506,** a determination is made as to which services **105** have a dependency relationship with the service of interest **110.** In some implementations, the service dependencies **120** are determined using a dependency map **115. In** some examples, the outage projection system **125** requests the dependency map **115** from the dependency map generator **114.** In other examples, the dependency map **115** is automatically provided to the outage projection system **125** (e.g., as part of the request/trigger).

At operation **508,** parity drift status information **130** for the service of interest **110** and the determined service dependencies **120** is received. In some examples, the outage projection system **125** requests the parity drift status information **130** from the parity drift detection system **116.** In other examples, the parity drift status information **130** is automatically provided to the outage projection system **125** (e.g., as part of the request/trigger).

At operation **510,** a ratio-based outage risk score **405** for the service of interest **110** is determined based on the parity drift status information **130.** For instance, the outage projection system **125** determines a ratio between the number of the service dependencies **120** in the cloud computing system **106** that are out of parity in the cloud computing system **106.**

At operation **512,** the outage projection system **125** uses the outage projection model **175** to determine an affinity-based outage projection score for the service of interest **110** based on the parity drift status information **130.** In some examples, the outage projection model **175** identifies one or more patterns in the parity drift status information **130** that can be correlated to one or more patterns in training data corresponding to previous service outages and generates an affinity-based outage projection score based on the identified pattern(s). In some examples, weights are applied to correlated patterns based on a number and/or severity level of previous (historical) outages, where higher weights may be applied to patterns that are associated with a higher number of outages, outages that last an extended period of time, outages that affect higher-priority services of interest **110** or users, etc. The affinity-based outage projection score represents a measured risk (potential) of a service outage occurring for the service of interest **110** in the cloud computing system **106** based on the correlation(s).

At operation **514,** a potential outage risk level is determined for the service of interest **110** for the cloud computing system **106** based on the affinity-based outage projection score. Various types of grading systems may be used to represent a scale of potential outage risk levels.

At operation **516,** an outage risk result **150** is generated and provided as an output. In some implementations, the outage risk result **150** includes the ratio-based outage risk score **405.** In further implementations, the outage risk result **150** additionally or alternatively includes the affinity-based outage risk score. In yet further implementations, the outage risk result **150** additionally or alternatively includes a potential outage risk level indicator **410** representing the determined potential outage risk level. According to examples, the outage risk result **150** is used to communicate the measured risk of a service outage occurring for the service of interest **110** in the cloud computing system **106.** In some examples, the outage risk result **150** is provided when one or a combination of the ratio-based outage risk score **405,** the affinity-based outage risk score, and/or the potential outage risk level indicator **410** satisfies an upper threshold. In further examples, one or more of the ratio-based outage risk score **405,** the affinity-based outage risk score, and/or the potential outage risk level indicator **410** are selectable, where a selection causes associated parity drift status information **130** and/or outage information **135** to be provided. The outage risk result **150,** parity drift status information **130,** and/or outage information **135** is provided to proactively facilitate prevention of a service outage of the service of interest **110** in the cloud computing system **106.**

In some implementations, the method **500** proceeds to decision operation **518,** where a determination is made as to whether the ratio-based outage risk score **405,** the ratio-based outage risk score **405,** the affinity-based outage risk score, and/or the potential outage risk level indicator **410** satisfies an upper threshold. For instance, when the upper level is not satisfied (e.g., indicating a lower risk of a potential service outage), the method **500** proceeds to operation **520,** where the configuration change of the service of interest **110** that triggered the outage projection system **125** at operation **504** is triggered or otherwise authorized to proceed.

In some implementations, when the ratio-based outage risk score **405,** the affinity-based outage risk score, and/or the potential outage risk level indicator **410** satisfies the upper threshold (e.g., indicating a higher risk of a potential service outage), the method **500** proceeds to operation **522,** where the configuration change of the service of interest **110** that triggered the outage projection system **125** at operation **504** is blocked or otherwise prevented from proceeding. In other implementations, an alert is provided to a user device **102** associated with the one or more service dependencies **120** that are out of parity (e.g., based on parity drift status information **130).** For instance, the parity drift status of the one or more service dependencies **120** causes the ratio-based outage risk score **405,** the affinity-based outage risk score, and/or the potential outage risk level **indicator410to** satisfy the upper threshold. In some examples, the alert includes a response link that a recipient can select to indicate a change in parity drift status of the corresponding service dependency **120.**

In some implementations, the method **500** returns to operation **508,** where updated parity drift status information **130** is received and, in some examples, an updated ratio-based outage risk score **405,** the affinity-based outage risk score, and/or the potential outage risk level indicator **410** is determined based on the updated parity drift status information **130.** In some examples, the outage projection system **125** receives an indication of a change in parity drift status of the one or more service dependencies **120.** In some examples, the indication is received in response to a selection of the response link by the recipient of the alert. In other examples, the indication is received in response to a probe (e.g., monitoring performed) by the outage projection system **125.** For instance, the outage projection system **125** monitors the parity drift status of the one or more service dependencies **120** and identifies when parity drift status information **130** of the one or more service dependencies **120** indicates the one or more service dependencies **120** are in parity or otherwise cause the outage risk score and/or level of the service of interest **110** to lower (e.g., reduce the risk of a service outage of the service of interest **110).** When the ratio-based outage risk score **405,** the affinity-based outage risk score, and/or the potential outage risk level indicator **410** are reduced such that the upper level is not satisfied (e.g., indicating a lower risk of a potential service outage), the method **500** continues to operation **520,** where the configuration change of the service of interest **110** is triggered or otherwise authorized to proceed.

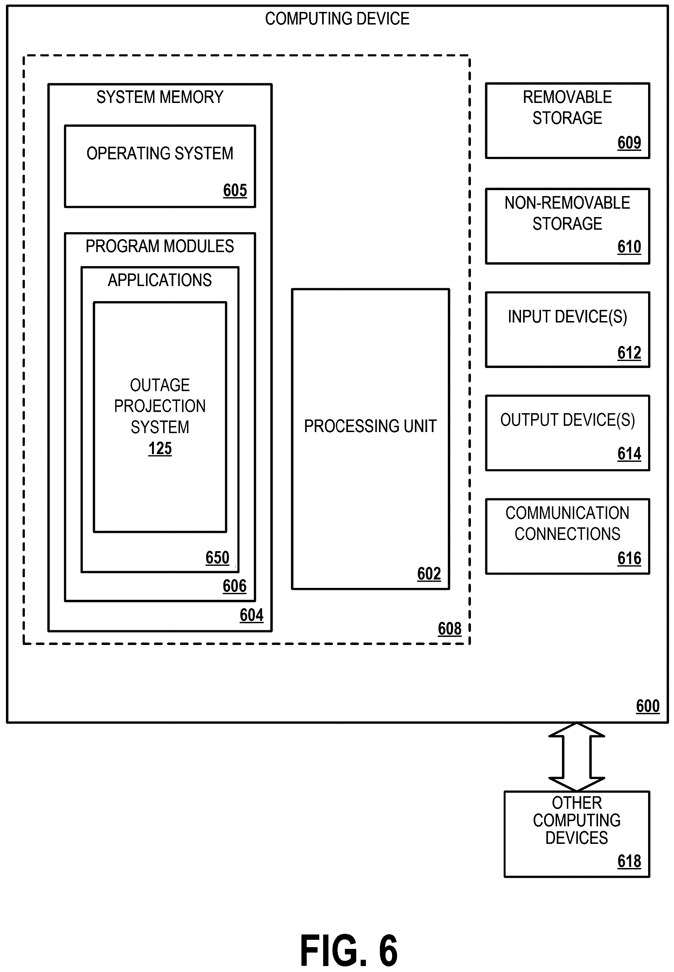

**FIGURE 6** and the associated description provide a discussion of a variety of operating environments in which examples of the invention may be practiced. However, the devices and systems illustrated and discussed with respect to **FIGURE 6** is for purposes of example and illustration and is not limiting of a vast number of computing device configurations that may be utilized for practicing aspects of the invention, described herein. **FIGURE 6** is a block diagram illustrating physical components (i.e., hardware) of a computing device **600** with which examples of the present disclosure may be practiced. In a basic configuration, the computing device **600** may include at least one processing unit and a system memory **604.** in examples, the processing unit(s) (e.g., processors) are referred to as a processing system **602.** Depending on the configuration and type of computing device, the system memory **604** may comprise volatile storage (e.g., random access memory), non-volatile storage (e.g., read-only memory), flash memory, or any combination of such memories. The system memory **604** may include an operating system **605** and one or more program modules **606** suitable for running software applications **650** (e.g., outage projection system **125).**

The operating system **605,** for example, may be suitable for controlling the operation of the computing device **600.** Furthermore, aspects of the invention may be practiced in conjunction with a graphics library, other operating systems, or any other application program and is not limited to any particular application or system. This basic configuration is illustrated in **FIGURE 6** by those components within a dashed line **608.** The computing device **600** may have additional features or functionality. For example, the computing device **600** may also include additional data storage devices (removable and/or non-removable) such as, for example, magnetic disks, optical disks, or tape. Such additional storage is illustrated in **FIGURE 6** by a removable storage device **609** and a non-removable storage device **610.**

As stated above, a number of program modules and data files may be stored in the system memory **604.** While executing on the processing system **602,** the program modules **606** may perform processes including one or more of the operations of the method **500** illustrated in **FIGURE 5****.** Other program modules that may be used in accordance with examples of the present invention and may include applications such as electronic mail and contacts applications, word processing applications, spreadsheet applications, database applications, slide presentation applications, drawing or computer-aided application programs, etc.

Furthermore, examples of the invention may be practiced in an electrical circuit comprising discrete electronic elements, packaged or integrated electronic chips containing logic gates, a circuit utilizing a microprocessor, or on a single chip containing electronic elements or microprocessors. For example, examples of the invention may be practiced via a system-on-a-chip (SOC) where each or many of the components illustrated in **FIGURE 6** may be integrated onto a single integrated circuit. Such an SOC device may include one or more processing units, graphics units, communications units, system virtualization units and various application functionality all of which are integrated (or "burned") onto the chip substrate as a single integrated circuit. When operating via an SOC, the functionality, described herein, with respect to generating suggested queries, may be operated via application-specific logic integrated with other components of the computing device **600** on the single integrated circuit (chip). Examples of the present disclosure may also be practiced using other technologies capable of performing logical operations such as, for example, AND, OR, and NOT, including mechanical, optical, fluidic, and quantum technologies.

The computing device **600** may also have one or more input device(s) **612** such as a keyboard, a mouse, a pen, a sound input device, a touch input device, etc. The output device(s) **614** such as a display, speakers, a printer, etc. may also be included. The aforementioned devices are examples and others may be used. The computing device **600** may include one or more communication connections **616** allowing communications with other computing devices **618.** Examples of suitable communication connections **616** include RF transmitter, receiver, and/or transceiver circuitry; universal serial bus (USB), parallel, and/or serial ports.

The term computer readable media as used herein may include computer storage media. Computer storage media may include volatile and nonvolatile, removable and non-removable media implemented in any method or technology for storage of information, such as computer readable instructions, data structures, or program modules. The system memory **604,** the removable storage device **609,** and the non-removable storage device **610** are all computer storage media examples (i.e., memory storage.) Computer storage media may include RAM, ROM, electrically erasable programmable read-only memory (EEPROM), flash memory or other memory technology, CD-ROM, digital versatile disks (DVD) or other optical storage, magnetic cassettes, magnetic tape, magnetic disk storage or other magnetic storage devices, or any other article of manufacture which can be used to store information and which can be accessed by the computing device **600.** Any such computer storage media may be part of the computing device **600.** Computer storage media does not include a carrier wave or other propagated data signal.

Communication media may be embodied by computer readable instructions, data structures, program modules, or other data in a modulated data signal, such as a carrier wave or other transport mechanism, and includes any information delivery media. The term "modulated data signal" may describe a signal that has one or more characteristics set or changed in such a manner as to encode information in the signal. By way of example, communication media may include wired media such as a wired network or direct-wired connection, and wireless media such as acoustic, radio frequency (RF), infrared, and other wireless media.

Systems and methods to determine a measured risk of a service outage of a service in a cloud computing system. A system determines service dependencies and evaluates parity drift status information associated with the dependencies using an outage projection model (e.g., a machine learning model, heuristic, and/or a combination of models) trained/otherwise operative to identify a pattern of parity drift status information correlated to a historical pattern associated with a past service outage. The system determines an outage risk score and/or level representing the measured risk of a service outage occurring for the service based on the correlation. The system further provides the outage risk score and/or level (e.g., to a remediation and/or deployment orchestration system). In some examples, an alert is provided when the outage risk score and/or level satisfies a threshold (e.g., is highly indicative of a potential service outage) to proactively facilitate prevention of an outage.

According to an aspect, a method is provided, comprising: identifying a first service in a cloud computing system; identifying a second service in the cloud computing system, where the first service is dependent on the second service; receiving parity drift status information of the second service in the cloud computing system; determining a first outage risk score for the first service in the cloud computing system based on the parity drift status information of the second service; providing an indication of the first outage risk score for the first service in the cloud computing system; providing an alert corresponding to the second service being out of parity when the parity drift status information of the second service indicates the second service is out of parity and the first outage risk score satisfies an upper threshold; and triggering a configuration change of the first service when the first outage risk score satisfies a lower threshold.

In an example, the method further comprises: determining a second outage risk score for the first service in the cloud computing system based on identifying a correlation between a pattern of the parity drift status information of the second service and a pattern of historical parity drift status information corresponding to a past outage of the first service; and providing an indication of the second outage risk score for the first service in the cloud computing system.

In an example, the second service comprises a plurality of service dependencies of the first service.

In an example, determining the second outage risk score comprises: inputting the parity drift status information of the second service into an outage projection model; detecting the pattern of the parity drift status information of the second service using the outage projection model; correlating the pattern of the parity drift status information of the second service to the pattern of historical parity drift status information corresponding to the past outage of the first service using the outage projection model; calculating the second outage risk score based on the correlation using the outage projection model; and outputting the second outage risk score from the outage projection model.

In an example, calculating the second outage risk score comprises applying at least one of: a severity weight based on a severity level of the past outage of the first service; or a frequency weight based on a number of occurrences of the past outage of the first service.

In an example, the method further comprises: receiving service outage information associated with the past outage of the first service; receiving the historical parity drift status information corresponding to the past outage of the first service; and configuring the outage projection model to: detect the pattern of the parity drift status information of the second service; correlate the pattern of the parity drift status information of the second service to the pattern of historical parity drift status information corresponding to the past outage of the first service; and calculate the second outage risk score based on the correlation.

In an example, the method further comprises: determining an outage risk level based on the second outage risk score; and providing an indication of the outage risk level.

According to an aspect, a computer system is provided comprising: a processing system; and memory comprising computer program instructions for performing operations comprising: identifying a service of interest in a first cloud computing system; identifying a service dependency of the service of interest in the first cloud computing system; receiving parity drift status information of the service dependency in the first cloud computing system; determining a first outage risk score for the service of interest in the first cloud computing system based on the parity drift status information of the service dependency; and providing an indication of the first outage risk score for the service of interest in the first cloud computing system.

According to an aspect, a system is provided comprising: a processing system; and memory storing instructions that, when executed, cause the system to perform operations comprising: identifying a service of interest in a first cloud computing system; identifying a service dependency of the service of interest in the first cloud computing system; receiving parity drift status information of the service dependency in the first cloud computing system; determining a first outage risk score for the service of interest in the first cloud computing system based on the parity drift status information of the service dependency; and providing an indication of the first outage risk score for the service of interest in the first cloud computing system.

In an example the system further comprises: determining a second outage risk score for the service of interest in the first cloud computing system based on identifying a correlation between a pattern of the parity drift status information of the service dependency in the first cloud computing system and a pattern of historical parity drift status information corresponding to a past outage of the service of interest; and providing an indication of the second outage risk score for the service of interest in the first cloud computing system.

In an example, the system further comprises an outage projection model; and determining the second outage risk score comprises: inputting the parity drift status information of the service dependency into the outage projection model; detecting the pattern of the parity drift status information of the service dependency using the outage projection model; correlating the pattern of the parity drift status information of the service dependency to the pattern of historical parity drift status information corresponding to the past outage of the service of interest using the outage projection model; calculating the second outage risk score based on the correlation using the outage projection model; and outputting the second outage risk score from the outage projection model.

In an example, the system further comprises: receiving service outage information associated with the past outage of the service of interest; receiving the historical parity drift status information corresponding to the past outage of the service of interest; and training the outage projection model to: detect the pattern of the parity drift status information of the service dependency; correlate the pattern of the parity drift status information of the service dependency to the pattern of historical parity drift status information corresponding to the past outage of the service of interest; and calculate the second outage risk score based on the correlation.

In an example, the system further comprises providing an alert corresponding to the service dependency being out of parity when the parity drift status information of the service dependency indicates the service dependency is out of parity and the first outage risk score or the second outage risk score satisfies an upper threshold.

In an example, the system further comprises triggering a configuration change of the service of interest when the first outage risk score or the second outage risk score satisfies a lower threshold.

In an example, the system further comprises: receiving parity drift status information of the service dependency in a second cloud computing system; determining a third outage risk score for the service of interest in the second cloud computing system based on identifying a correlation between a pattern of the parity drift status information of the service dependency in the second cloud computing system and a pattern of historical parity drift status information corresponding to a past outage of the service of interest; and providing an indication of the third outage risk score for the service of interest for the second cloud computing system.

In an example, providing the indication of the second outage risk score comprises providing the indication of the second outage risk score to a deployment orchestration system.

According to an aspect, a method is provided, comprising: identifying a first service in a first cloud computing system; identifying a second service in the first cloud computing system, wherein: the second service is a service dependency of the first service; and the second service comprises a plurality of service dependencies of the first service; receiving parity drift status information of the second service in the first cloud computing system; determining an outage risk score for the first service in the first cloud computing system based on identifying a correlation between a pattern of the parity drift status information of the second service and a pattern of historical parity drift status information corresponding to a past outage of the first service; and providing an indication of the outage risk score for the first service in the first cloud computing system.

In an example, the method further comprises providing an alert corresponding to the second service being out of parity when the parity drift status information of the second service indicates the second service is out of parity and the outage risk score satisfies an upper threshold.

In an example, the method further comprises triggering a configuration change of the first service when the outage risk score satisfies a lower threshold.

In an example, determining the outage risk score comprises: receiving service outage information associated with the past outage of the first service; receiving the historical parity drift status information corresponding to the past outage of the first service; and training a machine learning model to: detect the pattern of the parity drift status information of the second service; correlate the pattern of the parity drift status information of the second service to the pattern of historical parity drift status information corresponding to the past outage of the first service; and calculate the outage risk score based on the correlation; inputting the parity drift status information of the second service in the first cloud computing system into the machine learning model; detecting the pattern of the parity drift status information of the second service in the first cloud computing system using the machine learning model; correlating the pattern of the parity drift status information of the second service in the first cloud computing system to the pattern of historical parity drift status information corresponding to the past outage of the first service using the machine learning model; calculating the outage risk score based on the correlation using the machine learning model, wherein calculating the outage risk score comprises applying at least one of: a severity weight based on a severity level of the past outage of the first service; or a frequency weight based on a number of occurrences of the past outage of the first service; and outputting the outage risk score from the machine learning model.

In an example, the method further comprises: receiving parity drift status information of the second service in a second cloud computing system; determining a second outage risk score for the first service for the second cloud computing system based on identifying a correlation between a pattern of the parity drift status information of the second service in the second cloud computing system and a pattern of historical parity drift status information corresponding to a past outage of the first service; and providing an indication of the second outage risk score for the first service in the second cloud computing system.

Aspects of the present invention, for example, are described above with reference to block diagrams and/or operational illustrations of methods, systems, and computer program products according to aspects of the invention. The functions/acts noted in the blocks may occur out of the order as shown in any flowchart. For example, two blocks shown in succession may in fact be executed substantially concurrently or the blocks may sometimes be executed in the reverse order, depending upon the functionality/acts involved. Further, as used herein and in the claims, the phrase "at least one of element A, element B, or element C" is intended to convey any of: element A, element B, element C, elements A and B, elements A and C, elements B and C, and elements A, B, and C.

The description and illustration of one or more examples provided in this application are not intended to limit or restrict the scope of the invention as claimed in any way. The aspects, examples, and details provided in this application are considered sufficient to convey possession and enable others to make and use the best mode of claimed invention. The claimed invention should not be construed as being limited to any aspect, example, or detail provided in this application. Regardless of whether shown and described in combination or separately, the various features (both structural and methodological) are intended to be selectively included or omitted to produce an example with a particular set of features. Having been provided with the description and illustration of the present application, one skilled in the art may envision variations, modifications, and alternate examples falling within the spirit of the broader aspects of the general inventive concept embodied in this application that do not depart from the broader scope of the claimed invention.

## Claims

1. A method (500), comprising:
identifying a first service in a cloud computing system;
identifying (506) a second service in the cloud computing system, where the first service is dependent on the second service;
receiving (508) parity drift status information of the second service in the cloud computing system;
determining (512) a first outage risk score for the first service in the cloud computing system based on the parity drift status information of the second service;
providing (514) an indication of the first outage risk score for the first service in the cloud computing system;
providing (516) an alert corresponding to the second service being out of parity when the parity drift status information of the second service indicates the second service is out of parity and the first outage risk score satisfies an upper threshold; and
triggering (520) a configuration change of the first service when the first outage risk score satisfies a lower threshold.

2. The method of claim 1, further comprising:
determining a second outage risk score for the first service in the cloud computing system based on identifying a correlation between a pattern of the parity drift status information of the second service and a pattern of historical parity drift status information corresponding to a past outage of the first service; and
providing an indication of the second outage risk score for the first service in the cloud computing system.

3. The method of claim 2, wherein the second service comprises a plurality of service dependencies of the first service.

4. The method of claim 2, wherein determining the second outage risk score comprises:
inputting the parity drift status information of the second service into an outage projection model;
detecting the pattern of the parity drift status information of the second service using the outage projection model;
correlating the pattern of the parity drift status information of the second service to the pattern of historical parity drift status information corresponding to the past outage of the first service using the outage projection model;
calculating the second outage risk score based on the correlation using the outage projection model; and
outputting the second outage risk score from the outage projection model.

5. The method of claim 4, wherein calculating the second outage risk score comprises applying at least one of:
a severity weight based on a severity level of the past outage of the first service; or
a frequency weight based on a number of occurrences of the past outage of the first service.

6. The method of claim 4, further comprising:
receiving service outage information associated with the past outage of the first service;
receiving the historical parity drift status information corresponding to the past outage of the first service; and
configuring the outage projection model to:
detect the pattern of the parity drift status information of the second service;
correlate the pattern of the parity drift status information of the second service to the pattern of historical parity drift status information corresponding to the past outage of the first service; and
calculate the second outage risk score based on the correlation.

7. The method of claim 2, further comprising:
determining an outage risk level based on the second outage risk score; and
providing an indication of the outage risk level.

8. A system (100), comprising:
a processing system (602); and
memory (604) storing instructions that, when executed, cause the system to perform operations comprising:
identifying a service of interest in a first cloud computing system;
identifying (506) a service dependency of the service of interest in the first cloud computing system;
receiving (508) parity drift status information of the service dependency in the first cloud computing system;
determining (512) a first outage risk score for the service of interest in the first cloud computing system based on the parity drift status information of the service dependency; and
providing (516) an indication of the first outage risk score for the service of interest in the first cloud computing system.

9. The system of claim 8, further comprising:
determining a second outage risk score for the service of interest in the first cloud computing system based on identifying a correlation between a pattern of the parity drift status information of the service dependency in the first cloud computing system and a pattern of historical parity drift status information corresponding to a past outage of the service of interest; and
providing an indication of the second outage risk score for the service of interest in the first cloud computing system.

10. The system of claim 9, wherein:
the system further comprises an outage projection model; and
determining the second outage risk score comprises:
inputting the parity drift status information of the service dependency into the outage projection model;
detecting the pattern of the parity drift status information of the service dependency using the outage projection model;
correlating the pattern of the parity drift status information of the service dependency to the pattern of historical parity drift status information corresponding to the past outage of the service of interest using the outage projection model;
calculating the second outage risk score based on the correlation using the outage projection model; and
outputting the second outage risk score from the outage projection model.

11. The system of claim 10, further comprising:
receiving service outage information associated with the past outage of the service of interest;
receiving the historical parity drift status information corresponding to the past outage of the service of interest; and
training the outage projection model to:
detect the pattern of the parity drift status information of the service dependency;
correlate the pattern of the parity drift status information of the service dependency to the pattern of historical parity drift status information corresponding to the past outage of the service of interest; and
calculate the second outage risk score based on the correlation.

12. The system of claim 11, further comprising providing an alert corresponding to the service dependency being out of parity when the parity drift status information of the service dependency indicates the service dependency is out of parity and the first outage risk score or the second outage risk score satisfies an upper threshold.

13. The system of claim 11, further comprising triggering a configuration change of the service of interest when the first outage risk score or the second outage risk score satisfies a lower threshold.

14. The system of claim 11, further comprising:
receiving parity drift status information of the service dependency in a second cloud computing system;
determining a third outage risk score for the service of interest in the second cloud computing system based on identifying a correlation between a pattern of the parity drift status information of the service dependency in the second cloud computing system and a pattern of historical parity drift status information corresponding to a past outage of the service of interest; and
providing an indication of the third outage risk score for the service of interest for the second cloud computing system.

15. A method (500), comprising:
identifying a first service in a first cloud computing system;
identifying (506) a second service in the first cloud computing system, wherein:
the second service is a service dependency of the first service; and
the second service comprises a plurality of service dependencies of the first service;
receiving (508) parity drift status information of the second service in the first cloud computing system;
determining (512) an outage risk score for the first service in the first cloud computing system based on identifying a correlation between a pattern of the parity drift status information of the second service and a pattern of historical parity drift status information corresponding to a past outage of the first service; and
providing (516) an indication of the outage risk score for the first service in the first cloud computing system.
